# EUROPÄISCHE PATENTANMELDUNG

(11) **EP 1 452 497 A2**
(43) Veröffentlichungstag der Anmeldung: **01.09.2004**
(21) Anmeldenummer: 04002318.6
(22) Anmeldetag: 03.02.2004
(51) Int. Cl.: C03C 8/00, C23D 5/00

(54) **Verwendung eines Verbundwerkstoffes bei einem Kochgeschirr**

(30) Priorität: 26.02.2003 DE 10308039
(71) Anmelder: Silit-Werke GmbH & Co. KG, D-88499 Riedlingen (DE)
(72) Erfinder: Paukner, Josef, 88499 Riedlingen (DE); Nutz, Michael, 88527 Unlingen (DE)
(74) Vertreter: Tönhardt, Marion, Dr.

(57) **Zusammenfassung**

Ein Verbundwerkstoff, bestehend aus einem metallischen Rohkörper, dessen Oberfläche zumindest teilweise mit einer Emailglasur versehen ist, ist dadurch gekennzeichnet, daß die Emailglasur Silberionen oder eine Silberverbindung enthält. Auch ein Verfahren zum Herstellen eines Verbundwerkstoffes wird angegeben.

## Beschreibung

Die vorliegende Erfindung betrifft einen Verbundwerkstoff, bestehend aus einem metallischen Rohkörper, dessen Oberfläche zumindest teilweise mit einer Emailglasur versehen ist, sowie einem Kochgeschirr aus einem solchen Verbundwerkstoff.

Solche Verbundwerkstoffe und insbesondere daraus bestehende Kochgeschirre, die auf der Außen- und/oder Innenseite emailliert sind, sind seit langem bekannt. Bei ihnen muß, da sie im Lebensmittelbereich eingesetzt werden, sichergestellt werden, daß sie nicht kontaminieren, beispielsweise durch Bakterien, deren Existenz sich nirgends verhindern läßt. Wenn sie zu großen Kulturen heranwachsen, können sie gesundheitliche Schäden verursachen.

Es ist die Aufgabe der Erfindung, einen Verbundwerkstoff bzw. ein Kochgeschirr daraus zur Verfügung zu stellen, die eine antibakterielle Wirkung haben.

Diese Aufgabe wird durch einen Verbundwerkstoff nach Anspruch 1 und ein Kochgeschirr nach Anspruch 3 gelöst. Ein Verfahren zum Herstellen eines erfindungsgemäßen Verbundwerkstoffes ist in Anspruch 4 angegeben.

Gemäß der Erfindung enthält bei dem Verbundwerkstoff die Emailglasur Silberionen oder eine Silberverbindung.

Die bakterienhemmende Wirkung von Silber ist bekannt, sie wird auch als oligodynamischer Effekt bezeichnet. Bereits relativ geringe Mengen reichen aus. Lediglich Quecksilber zeigt einen stärkeren oligodynamischen Effekt als Silber, hat aber den Nachteil, daß es stark giftig und schwierig einzusetzen ist. Silber hingegen ist für den Menschen gesundheitlich völlig unbedenklich.

Es ist bekannt, keramische Oberflächen mit antibakteriellem Effekt, beispielsweise im Sanitärbereich, einzusetzen. Eine bakterienhemmende Eigenschaft bei Kochgeschirren gibt es jedoch bisher nicht. Die erfindungsgemäße Vorgehensweise läßt sich in Verbindung mit der Emailglasur leicht realisieren, während eine antibakterielle Wirkung bei Edelstahlkochgeschirren nicht in ähnlicher Weise herbeigeführt werden kann.

Vorzugsweise besteht daher der metallische Rohkörper aus Stahl.

Ein Kochgeschirr aus einem Verbundwerkstoff gemäß der Erfindung ist dadurch gekennzeichnet, daß die die Silberionen oder die Silberverbindung enthaltende Emailglasur zumindest auf der Innenseite des Kochgeschirres vorgesehen ist. Innenseite meint dabei den Bereich, der bei normalem Gebrauch mit Nahrungsmitteln in Kontakt kommt.

Ein Verfahren zum Herstellen eines Verbundwerkstoffes gemäß der vorliegenden Erfindung besteht aus den Schritten:
- Vorbereiten einer Emailzusammensetzung;
- Einmischen einer silberhaltigen Substanz in die Emailzusammensetzung;
- Aufbringen der Emailzusammensetzung auf zumindest einen Teil der Oberfläche eines metallischen Rohkörpers; und
- Einbrennen der Emailzusammensetzung bei Temperaturen unterhalb von 900 °C; bevorzugt 780 °C bis 900 °C, besonders bevorzugt wird bei etwa 860 °C bis 880 °C eingebrannt.

Der Verbundwerkstoff hat nach dem Emaileinbrand eine antibakterielle Oberfläche, so daß das Wachstum bzw. die Vermehrung von Bakterienkulturen verhindert wird. Beim Emaileinbrand werden die Silberionen fest und dauerhaft in das Glasnetzwerk des Emails eingebunden, so daß sich diese Wirkung auch nicht über die Zeit verliert.

In einer praktischen Ausgestaltung des Verfahrens wird eine Emailfritte gegebenenfalls mit Pigment und mit der silberhaltigen Substanz in einer Kugelmühle vermahlen, wobei der Anteil an silberhaltiger Substanz im Bereich von 0,1 bis 10 Gew.% der Fritte liegt. Bevorzugter Bereich ist 0,1 bis 3 Gew.-%.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verbundwerkstoff, bestehend aus einem metallischen Rohkörper, dessen Oberfläche zumindest teilweise mit einer Emailglasur versehen ist, **dadurch gekennzeichnet, daß** die Emailglasur Silberionen oder eine Silberverbindung enthält.

2. Verbundwerkstoff nach Anspruch 1, **dadurch gekennzeichnet, daß** der Rohkörper aus Stahl besteht.

3. Kochgeschirr aus einem Verbundwerkstoff nach Anspruch 1 oder 2, **dadurch gekennzeichnet, daß** die die Silberionen oder die Silberverbindung enthaltene Emailglasur zumindest auf der Innenseite des Kochgeschirres vorgesehen ist.

4. Verfahren zum Herstellen eines Verbundwerkstoffes nach Anspruch 1 oder 2, mit den Schritten:
- Vorbereiten einer Emailzusammensetzung;
- Einmischen einer silberhaltigen Substanz in die Emailzusammensetzung;
- Aufbringen der Emailzusammensetzung auf zumindest einen Teil der Oberfläche eines metallischen Rohkörpers; und
- Einbrennen der Emailzusammensetzung bei Temperaturen unterhalb von 900 °C.

5. Verfahren nach Anspruch 4, **dadurch gekennzeichnet, daß** zwischen 780 °C und 900 °C, bevorzugt zwischen 860 °C und 880 °C, eingebrannt wird.
